# FASCICULE DE BREVET EUROPEEN

(11) **EP 3 645 951 B1**
(45) Date de publication et mention de la délivrance du brevet: **27.01.2021**
(21) Numéro de dépôt: 18733310.9
(22) Date de dépôt: 29.06.2018
(51) Int. Cl.: F25B 9/14, F16J 1/10

(54) **DISPOSITIF DE REFROIDISSEMENT DESTINÉ À ÊTRE EMBARQUÉ DANS UN DISPOSITIF DE VISION INFRAROUGE À ÉLÉMENT DÉFORMABLE**
KÜHLVORRICHTUNG ZUR AUSSTATTUNG EINER INFRAROTSICHTVORRICHTUNG MIT EINEM VERFORMBAREN ELEMENT
COOLING DEVICE INTENDED TO EQUIP AN INFRARED VISION DEVICE WITH A DEFORMABLE ELEMENT

(30) Priorité: 30.06.2017 FR 1756194
(43) Date de publication de la demande: 06.05.2020
(73) Titulaire: Safran Electronics & Defense, 92100 Boulogne-Billancourt (FR)
(72) Inventeur: COTTEREAU, Bertrand, 92100 Boulogne-Billancourt (FR); DUVAL, Nicolas, 92100 Boulogne-Billancourt (FR)
(74) Mandataire: Regimbeau
(86) Numéro de dépôt international: PCT/EP2018/067627
(87) Numéro de publication internationale: WO 2019/002570

(56) Documents cités:
- EP-A2- 0 339 836
- FR-A1- 2 944 416
- US-A1- 2007 261 407
- US-A1- 2012 256 088

## Description

### DOMAINE DE L'INVENTION

La présente invention concerne un dispositif de refroidissement.

Ce dispositif de refroidissement trouve avantageusement application dans un dispositif de vision infrarouge.

### ETAT DE LA TECHNIQUE

On connait des équipements de vision infrarouge, tels que des jumelles par exemple, qui permettent de visualiser des cibles la nuit ou à travers des fumées.

De tels équipements de vision infrarouge comprennent un détecteur infrarouge et un dispositif de refroidissement (également appelé machine à froid ou micro-refroidisseur), assurant le refroidissement du détecteur infrarouge, à une température typiquement de l'ordre de 80 degrés Kelvin.

Un dispositif de refroidissement pour équipement de vision infrarouge connu, de type Stirling alpha, comprend un carter, une manivelle mobile en rotation par rapport au carter, un organe de couplage monté à rotation sur la manivelle, et deux pistons : un piston de compression de gaz, conventionnellement nommé piston « chaud », et un piston régénérateur, conventionnellement nommé piston « froid » par contraste avec le piston chaud.

Une transformation d'un mouvement de rotation continu de la manivelle par rapport au carter en un mouvement alternatif de translation de chacun des deux pistons par rapport au carter est mise en oeuvre au moyen de deux bielles. Chaque bielle est montée à rotation sur la pièce de couplage d'une part et l'un des pistons d'autre part, de sorte à former un système bielle-manivelle classique.

Les bielles présentent cependant comme inconvénient de causer un bruit phonique important dans l'équipement de vision infrarouge. Ce bruit est causé par des vibrations engendrées par des chocs de rattrapage de jeu au niveau des deux liaisons pivot que chaque bielle forme avec d'une part l'un des deux pistons et d'autre part avec l'organe de couplage, lorsque des directions d'effort changent. Ce bruit est désagréable pour un utilisateur de l'équipement de vision infrarouge. Par ailleurs, un équipement de vision infrarouge a souvent vocation à être utilisée dans des missions demandant une grande discrétion. Or, un utilisateur de l'équipement de vision infrarouge pourrait être repéré à cause du bruit phonique important causé par la bielle de cet équipement. Pour éviter à ce problème de bruit phonique, il est nécessaire de réduire les jeux des liaisons pivot à quelques microns. Ceci augmente toutefois le coût de fabrication du dispositif de refroidissement.

Un autre inconvénient de la bielle est que les deux liaisons pivot peuvent s'user ou se gripper. Pour éviter ces problèmes, il est nécessaire d'avoir une maîtrise parfaite sur les paramètres de tribologie relatifs à la bielle et les deux pièces sur lesquelles elle est montée à rotation pour former les deux liaisons pivot (lubrification, dureté, état de surface, etc.). Or, ces exigences ne peuvent pas être remplies sans augmenter le coût de fabrication du dispositif de refroidissement.

Pour s'affranchir de ces problèmes sans pour autant augmenter le coût de fabrication du dispositif de refroidissement, il a été proposé de remplacer la bielle déplaçant le piston de compression par un élément déformable. L'élément déformable est encastré d'une part au piston et d'autre part à un bord de l'organe de couplage qui se trouve en regard du piston. L'élément déformable s'étend dans son entièreté entre l'organe de couplage et le piston de compression. Lorsque la manivelle est mise en rotation continue par rapport au carter, l'élément déformable transmet au piston, tout en se déformant, le mouvement de translation alternatif subi par l'organe de couplage. En remplaçant une des bielles par l'élément déformable, on supprime dans le dispositif de refroidissement au moins une liaison pivot génératrice de bruit phonique.

Or, un dispositif de refroidissement pour équipement à vision infrarouge se doit d'être le plus compact possible. Pour respecter cette exigence de compacité, la distance séparant le piston et l'organe de couplage est faible comparativement à la course du piston. Ceci a pour conséquence que l'élément déformable qui s'étend entre le piston et cet organe est fortement sollicité en flexion au cours d'un tour de manivelle, ce qui le fatigue de manière importante.

Il a été proposé dans le document FR3033630 de fixer un élément déformable non pas à un premier bord de l'organe de couplage qui se trouve en regard du piston, mais à un deuxième bord opposé de l'organe de couplage qui est opposé au premier bord. Ce deuxième bord est plus éloigné du piston que le premier bord. En conséquence, l'élément déformable est plus long que s'il était encastré au premier bord de l'organe de couplage. Grâce à cette surlongueur, l'élément déformable est comparativement moins fléchi au cours d'un tour de la manivelle. Et comme l'élément déformable est moins sollicité en flexion, sa fatigue est amoindrie. Cette surlongueur de l'élément déformable est obtenue sans avoir à augmenter la distance entre le piston et la manivelle. La dimension du dispositif de refroidissement parallèlement à l'axe de translation du piston n'est donc pas augmentée de manière significative.

Cependant, l'élément déformable décrit dans le document FR3033630 est en forme de L. Cette forme en L induit nécessairement un décalage du piston déplacé par cet élément déformable par rapport à l'organe de couplage, et donc un décalage de l'axe central du piston par rapport à l'axe de rotation de la manivelle. Ceci a pour inconvénient de devoir modifier la forme du carter et requérir une augmentation significative de la dimension du dispositif dans une direction perpendiculaire à l'axe de translation de ce piston EP0339836 divulgue un dispositif de refroidissement selon le préambule de la revendication 1. Z

### EXPOSE DE L'INVENTION

Un but de l'invention est de proposer un dispositif de refroidissement plus résistant à l'usure, tout en étant de fabrication peu coûteuse, et générant un bruit phonique réduit sans augmenter significativement son encombrement.

Il est ainsi proposé, selon un premier aspect de l'invention, un dispositif de refroidissement comprenant :
- un carter,
- une manivelle mobile en rotation par rapport au carter,
- un piston,
- un organe de couplage monté à rotation sur la manivelle, l'organe de couplage présentant un premier bord en regard du piston et un deuxième bord opposé au premier bord,
- un élément déformable encastré à l'organe de couplage et encastré au piston, l'élément déformable étant configuré pour déplacer le piston en translation par rapport au carter tout en se déformant, lorsque la manivelle est mise en rotation par rapport au carter, l'élément déformable étant encastré au deuxième bord de l'organe de couplage.

Comme le premier bord de l'organe de couplage est en regard du piston et que le deuxième bord est opposé au premier bord, le deuxième bord est plus éloigné du piston que le premier bord. En conséquence, l'élément déformable est plus long que s'il était encastré au premier côté de l'organe de couplage, comme cela est proposé dans l'état de la technique. Grâce à cette surlongueur, l'élément déformable est comparativement moins fléchi au cours d'un tour de la manivelle. Et comme l'élément déformable est moins sollicité en flexion, sa fatigue est amoindrie. Cette surlongueur de l'élément déformable est obtenue sans avoir à augmenter la distance entre le piston et la manivelle. La dimension du dispositif de refroidissement parallèlement à l'axe de translation du piston n'est donc pas augmentée de manière significative.

De plus, l'élément déformable comprend :
- une première portion s'étendant le long du deuxième bord de l'organe parallèlement à un axe de rotation de la manivelle,
- une deuxième portion prolongeant la première portion et s'étendant vers le piston,
- une troisième portion prolongeant la deuxième portion et s'étendant parallèlement à l'axe de rotation de la manivelle, de sorte que les trois portions forment un U chevauchant l'organe de couplage.

Cette forme particulière d'élément déformable a pour avantage de ne pas requérir une augmentation significative d'une dimension du dispositif de refroidissement suivant une direction perpendiculaire à l'axe de translation du piston.

Un autre avantage procuré par cette forme particulière d'élément déformable est qu'elle est facilement adaptable à dispositifs de refroidissement existants dans lesquels l'axe de translation du piston et l'axe de rotation de la manivelle sont coplanaires.

Le dispositif de refroidissement peut comprendre en outre les caractéristiques optionnelles suivantes, prises seules ou en combinaison lorsque cela est techniquement possible.

L'élément déformable peut présenter une forme adaptée pour contourner l'organe de couplage sans toucher le premier bord au cours de la rotation de la manivelle par rapport au carter.

Il peut en outre être prévu que :
- la manivelle comprenne un arbre moteur et un maneton excentré par rapport à l'arbre moteur,
- l'organe de couplage soit monté à rotation sur le maneton, et soit localisé entre la deuxième portion de l'organe de couplage et l'arbre moteur.

L'élément déformable peut présenter un arrondi et/ou un congé en au moins une jonction entre deux des portions.

La manivelle peut comprendre un maneton, et l'organe de couplage comprendre une première paroi dans laquelle le premier bord est formé et une deuxième paroi dans laquelle le deuxième bord est formé, le maneton étant agencé entre les deux parois.

L'élément déformable peut être réalisé en métal.

L'élément déformable peut être une tôle, voire une tôle bleue à calibres.

L'élément déformable peut comprendre une portion d'extrémité présentant un premier orifice, et le piston présenter : une rainure pour recevoir la portion d'extrémité, deux orifices débouchant dans la rainure et agencés pour être alignés avec le premier orifice, et une goupille passée à travers les trois orifices alignés pour encastrer l'élément déformable au piston.

Le dispositif de refroidissement peut en outre comprendre
- un écrou formé dans l'organe de couplage,
- une vis propre à coopérer avec l'élément déformable et l'écrou de sorte à encastrer l'élément déformable à l'organe de couplage.

Par ailleurs, le carter peut définir une cavité logeant l'organe de couplage, et présente par ailleurs un passage d'accès à la cavité, et l'écrou peut être orienté en regard du passage d'accès de sorte que la vis puisse être vissée dans l'écrou au moyen d'un outil de vissage introduit dans la cavité via le passage d'accès.

Le dispositif de refroidissement peut être du type Stirling alpha, auquel cas le piston peut être un piston froid du dispositif de refroidissement.

Le dispositif de refroidissement peut comprendre en outre :
- un deuxième piston,
- un deuxième élément déformable encastré à l'organe de couplage et encastré au deuxième piston, le deuxième élément déformable étant configuré pour déplacer le deuxième piston en translation par rapport au carter tout en se déformant, lorsque la manivelle est mise en rotation par rapport au carter.

L'organe de couplage peut présenter également un troisième bord en regard du deuxième piston, dans lequel le deuxième élément déformable est encastré au troisième bord de l'organe de couplage.

Lorsque le dispositif de refroidissement est de type Stirling alpha, le deuxième piston peut être un piston chaud du dispositif de refroidissement.

Le dispositif de refroidissement peut être tout particulièrement destiné à être embarqué dans un dispositif de vision infrarouge.

Selon un deuxième aspect de l'invention, il est proposé un dispositif de vision infrarouge, par exemple des jumelles, comprenant un dispositif de refroidissement conforme au premier aspect de l'invention.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 est une vue schématique de jumelles à vision infrarouge, selon un mode de réalisation de l'invention.
- La figure 2 est une vue en coupe partielle d'un dispositif de refroidissement, selon un mode de réalisation de l'invention.
- La figure 3 est une vue en perspective d'un carter d'un dispositif de refroidissement selon un mode de réalisation de l'invention.
- La figure 4 est une vue partielle en coupe et en perspective d'un dispositif de refroidissement selon un premier mode de réalisation de l'invention.
- La figure 5 est une vue en perspective de certaines pièces du dispositif de refroidissement selon le premier mode de réalisation.
- Les figures 6 et 7 sont deux vues en perspectives d'un premier élément déformable du dispositif de refroidissement selon le premier mode de réalisation, respectivement dans un état non-déformé et dans un état déformé.
- La figure 8 est une vue en perspective du premier élément déformable représenté sur les figures 6 et 7 et d'autres pièces du dispositif de refroidissement auxquelles cet élément déformable est encastré.
- La figure 9 est une vue en perspective d'un deuxième élément déformable du dispositif de refroidissement selon le premier mode de réalisation.
- La figure 10 est une vue partielle en perspective du deuxième élément déformable représenté sur la figure 9 et d'un organe de couplage du dispositif de refroidissement de la figure 5.
- La figure 11 est une vue partielle en coupe en perspective du deuxième élément déformable représenté sur la figure 9 et d'un piston du dispositif de refroidissement de la figure 5.
- La figure 12 est une vue en perspective de certaines pièces d'un dispositif de refroidissement selon un deuxième mode de réalisation de l'invention.
- La figure 13 est une vue en perspective de certaines pièces d'un dispositif de refroidissement selon un troisième mode de réalisation de l'invention.

Sur l'ensemble des figures, les éléments similaires portent des références identiques.

### DESCRIPTION DETAILLEE DE L'INVENTION

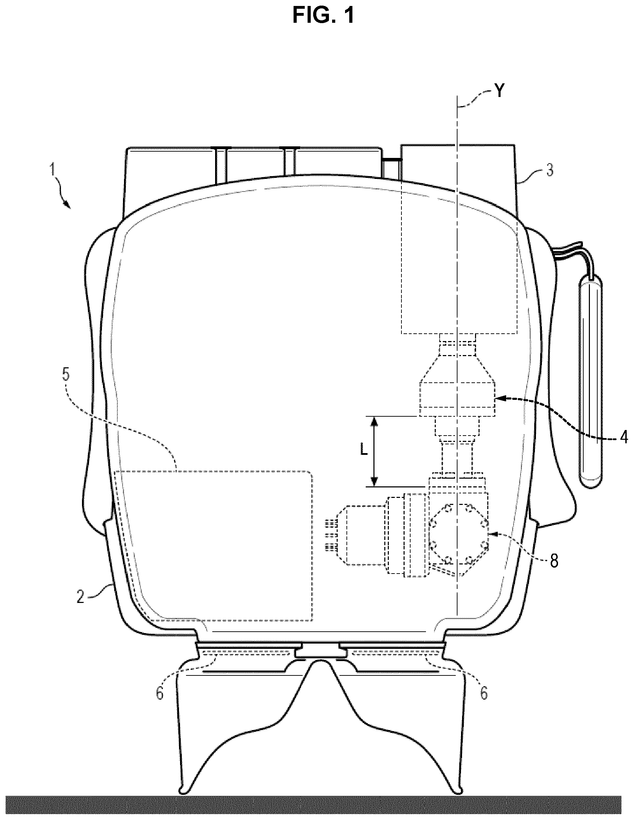

La **figure 1** représente de manière schématique des jumelles de vision infrarouge 1. Les jumelles 1 comprennent un boîtier 2, un système optique 3, un détecteur infrarouge 4, un module de traitement 5 et deux écrans d'affichage 6. Le système optique 3 présente un axe optique Y. Le système optique 3 est agencé pour transmettre un rayonnement infrarouge émis par une cible au module de détection 4. Le module de détection 4 convertit le rayonnement infrarouge reçu en un signal de détection qui est transmis au module de traitement 5. Le module de traitement 5 commande l'affichage d'une image sur les écrans d'affichage 6 pour permettre à un utilisateur de visualiser la cible. A cet effet, l'utilisateur positionne ses yeux en face des écrans d'affichage 6.

Les jumelles comprennent par ailleurs un dispositif de refroidissement 8. Dans le présent texte, le terme de « dispositif de refroidissement » est à interpréter comme toute machine thermique configurée pour produire du froid (telle qu'une machine à froid, un refroidisseur, un micro-refroidisseur, etc.). Le dispositif de refroidissement a pour fonction de maintenir la température du détecteur infrarouge, à une température très basse, de l'ordre de 80 degrés Kelvin.

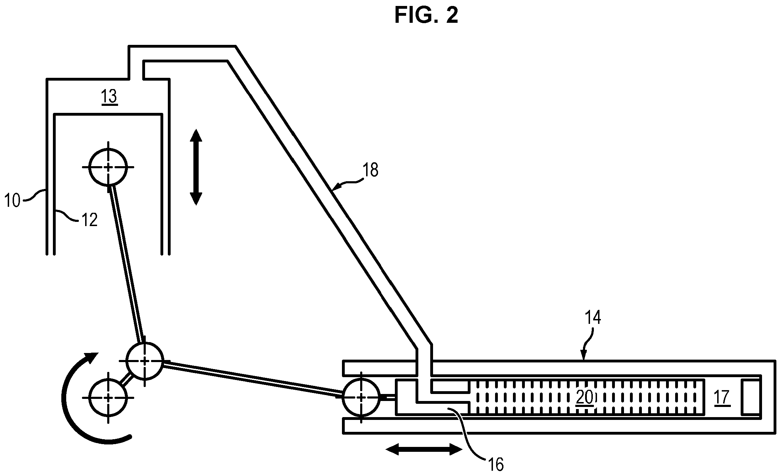

En référence à la **figure 2****,** le dispositif de refroidissement 8 selon un premier mode de réalisation comprend un cylindre de compression 10 ayant un axe central X, et un piston de compression 12 mobile en translation suivant l'axe X dans le cylindre de compression 10. La chambre de compression 13 est définie par le cylindre de compression 10 et le piston de compression 12.

Le piston de compression 12 a pour fonction, lorsqu'il est déplacé en translation, de comprimer ou détendre un gaz se trouvant dans la chambre de compression 13.

Le dispositif de refroidissement 8 comprend en outre un cylindre de régénération 14 présentant comme axe central l'axe Y et un piston régénérateur 16 mobile en translation suivant l'axe Y dans le cylindre de régénération 14. Le cylindre de régénération 14 est par exemple formé dans un doigt froid.

Le système optique 3, le détecteur 4 et le doigt froid 14 sont coaxiaux et agencés dans cet ordre le long de l'axe Y.

La chambre d'expansion 17 est définie par le cylindre de régénération 14 et le piston régénérateur 16. Le piston régénérateur 16 a pour fonction, lorsqu'il est déplacé en translation dans le cylindre de comprimer ou détendre un gaz se trouvant dans la chambre d'expansion 17.

Le dispositif de refroidissement 8 comprend une canalisation 18 reliant la chambre de compression 13 à la chambre d'expansion 17.

Le dispositif de refroidissement 8 comprend par ailleurs un régénérateur 20, agencé dans la chambre d'expansion 17. Le régénérateur 20 est un corps creux adapté pour stocker une partie de l'énergie calorifique d'un gaz qui le traverse, lorsque le piston de compression 12 comprime le gaz se trouvant dans la chambre de compression 13 et de restituer ensuite cette énergie lors d'une détente de gaz dans la chambre d'expansion 17, provoquée par un déplacement du piston régénérateur 16.

Le piston régénérateur 16 est fixé au régénérateur 20, ou forme une partie du régénérateur 20.

Le dispositif de refroidissement 8 est de type Stirling alpha. A titre de rappel, un cycle de Stirling comprend quatre phases :
- Une phase de compression isotherme, au cours de laquelle du gaz se trouvant dans la chambre de compression 13 est comprimé par le piston de compression 12 s'éloignant de la cavité centrale.
- Une phase de refroidissement isochore, au cours de laquelle le gaz comprimé est transféré de la chambre de compression 13 vers la chambre d'expansion 17 via la canalisation 18. Le gaz cède une partie de son énergie calorifique au régénérateur 20, lorsqu'il le traverse. La baisse de température qui est alors provoquée entraîne une chute de pression.
- Une phase de détente isotherme, au cours de laquelle engendrée par un déplacement du piston régénérateur 16 vers la cavité centrale. La chute de pression entraîne le refroidissement du gaz contenu dans la chambre d'expansion 17.
- Une phase de réchauffement isochore, au cours de laquelle le gaz passe de la chambre d'expansion 17 vers la chambre de compression 13, via la canalisation 18. En traversant le régénérateur 20, le gaz récupère la chaleur qu'il a cédée durant la phase de refroidissement isochore.

Le piston de compression 12 est appelé piston « chaud » et le piston régénérateur est appelé piston « froid ». Ces deux appellations, bien connues de l'homme du métier, font référence au fait que le gaz dans la chambre de compression 13 est plus chaud que dans la chambre d'expansion 17.

On va maintenant détailler les moyens de déplacement des pistons 12 et 16 qui permettent de mettre en œuvre ce cycle de Stirling.

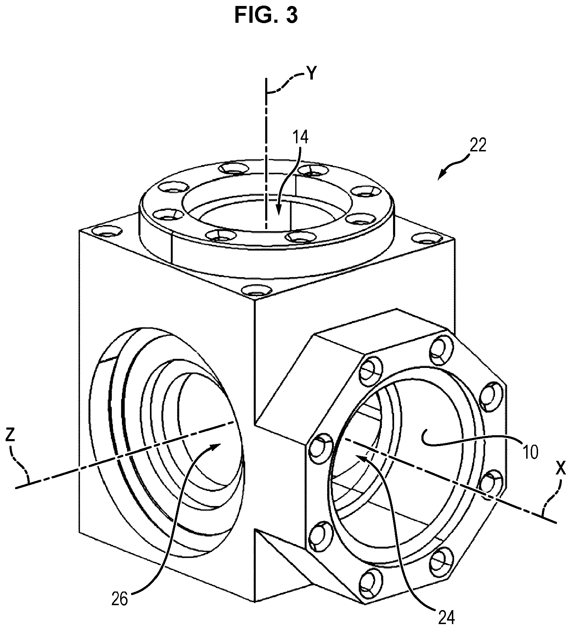

En référence à la **figure 3****,** le dispositif de refroidissement 8 comprend un carter 22 définissant une cavité centrale 24.

Le cylindre de compression 10 débouche dans la cavité centrale 24. Le cylindre de compression 10 est au moins en partie formé par le carter 22. Similairement, le cylindre de régénération 14 débouche dans la cavité centrale 24, et est en partie formé par le carter 22.

En revanche, la canalisation 18 relie la chambre de compression 13 à la chambre d'expansion 17 sans passer par la cavité centrale 24.

Le carter 22 définit un passage d'accès 26 à la cavité centrale 24, lequel s'étend le long d'un troisième axe Z. Les axes X, Y, Z sont orthogonaux deux à deux. Ils passent par un même point central qui se trouve dans la cavité centrale définie par le carter 22.

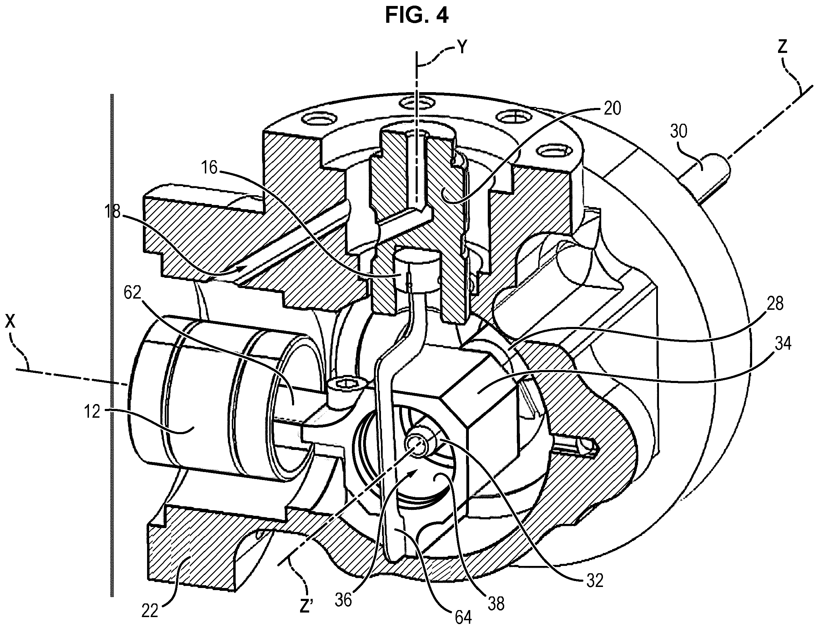

En référence à la **figure 4****,** le dispositif de refroidissement 8 comprend une manivelle 28 configurée pour être entraînée en rotation autour de l'axe Z.

La manivelle 28 est entraînée en rotation par un moteur, par exemple un moteur électrique (non représenté sur les figures). Le moteur est typiquement agencé à l'extérieur de la cavité centrale 24, dans une partie du générateur se trouvant entre le module de traitement 5 et la cavité centrale 24, cette partie étant visible sur la figure 1.

La manivelle 28 comprend un arbre moteur 30 s'étendant dans le passage d'accès 26 à la cavité centrale 24.

Une première extrémité de l'arbre moteur 30 est montée à rotation sur le moteur. Une deuxième extrémité de l'arbre moteur 30, opposée à la première extrémité, s'étend dans la cavité centrale 24 ou à proximité de celle-ci.

L'arbre moteur 30 est mobile en rotation autour de l'axe Z. L'arbre moteur 30 présente par exemple une surface d'extrémité circulaire.

La manivelle 28 comprend en outre un maneton 32 fixé à l'extrémité de l'arbre de moteur la plus proche de la cavité centrale 24. Le maneton 32 présente une forme de révolution autour d'un axe Z' parallèle à l'axe Z, mais à distance de celui-ci. Le maneton 32 est donc amené à se déplacer en orbite autour de l'axe Z, au cours de la rotation de l'arbre moteur 30.

Le maneton 32 se trouve dans la cavité centrale 24. Le maneton 32 présente une surface externe typiquement cylindrique de révolution.

Le dispositif de refroidissement 8 comprend en outre un organe de couplage 34 monté à rotation sur la manivelle 28.

Plus précisément, l'organe de couplage est monté à rotation sur le maneton 32 de la manivelle 28 autour de l'axe Z'.

L'organe de couplage 34 présente une surface radialement interne 36. La surface radialement interne 36 définit un espace interne dans lequel le maneton 32 est reçu. L'organe de couplage 34 s'étend donc autour de l'axe du maneton 32.

Le diamètre interne de la surface radialement interne 36 de l'organe de couplage 34 est plus grand que le diamètre externe du maneton 32, si bien qu'un interstice annulaire 38 est formé entre la surface externe du maneton 32 et la surface interne 36 de l'organe 34.

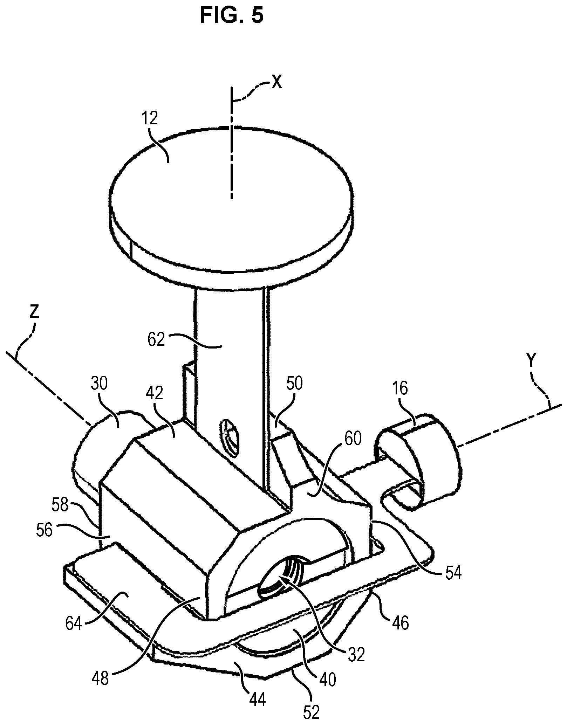

En référence à la **figure 5**, un système de roulements à billes 40 est agencé dans cet interstice annulaire 36.

L'organe de couplage 34 comprend une première paroi 42 et une deuxième paroi 44. Le maneton 32 s'étend entre la première paroi 42 et la deuxième paroi 44.

L'organe de couplage 34 comprend en outre une troisième paroi 46 et une quatrième paroi 48. Le maneton 32 s'étend entre la troisième paroi 46 et la quatrième paroi 48.

La troisième paroi 46 et la quatrième paroi 48 relient chacune la première paroi 42 à la deuxième paroi 44. Autrement dit, les quatre parois 42, 44, 46, 48 font ensemble le tour du maneton 32 autour de son axe Z'.

L'organe de couplage 34 comprend un premier bord libre 50 en regard du piston de compression 12, et un deuxième bord libre 52 opposé au premier bord 50 par rapport au maneton 32. Le premier bord libre 50 est formé dans la première paroi 42, et le deuxième bord libre 52 est formé dans la deuxième paroi 44.

L'organe de couplage 34 comprend un troisième bord 54 en regard du piston régénérateur 16, et un quatrième bord 56 opposé au troisième bord 54 par rapport au maneton 32. Le troisième bord libre 54 est formé dans la troisième paroi 46, et le quatrième bord libre 56 est formé dans la quatrième paroi 48.

Le troisième bord libre 54 et le quatrième bord libre 56 relient chacune le premier bord 50 au deuxième bord 52.

Les quatre bords libres 50, 52, 54, 56 forment ensemble une portion de la surface externe de l'organe de couplage 34, fermée sur elle-même et s'étendant autour du maneton 32. Les quatre bords 50, 52, 54, 56 définissent quatre côtés de l'organe de couplage 34 vu dans un plan de coupe perpendiculaire à l'axe moteur Z.

L'organe de couplage 34 présente en outre un cinquième bord 58 en regard de l'arbre moteur 30, et un sixième bord 60 opposé au cinquième bord 58.

Le cinquième bord 58 et le sixième bord 60 relient chacun la surface interne à la surface externe de l'organe de couplage 34.

Le dispositif de refroidissement comprend un premier élément déformable 62 configuré pour transmettre au piston de compression 12, tout en se déformant, un mouvement de translation alternatif subi par l'organe de couplage 34 lorsque la manivelle 28 est mise en rotation continue par rapport au carter 22 autour de l'axe Z.

Le dispositif de refroidissement comprend par ailleurs un deuxième élément déformable 64 configuré pour transmettre au piston régénérateur 16, tout en se déformant, un mouvement de translation alternatif subi par l'organe de couplage 34 lorsque la manivelle 28 est mise en rotation continue par rapport au carter 22.

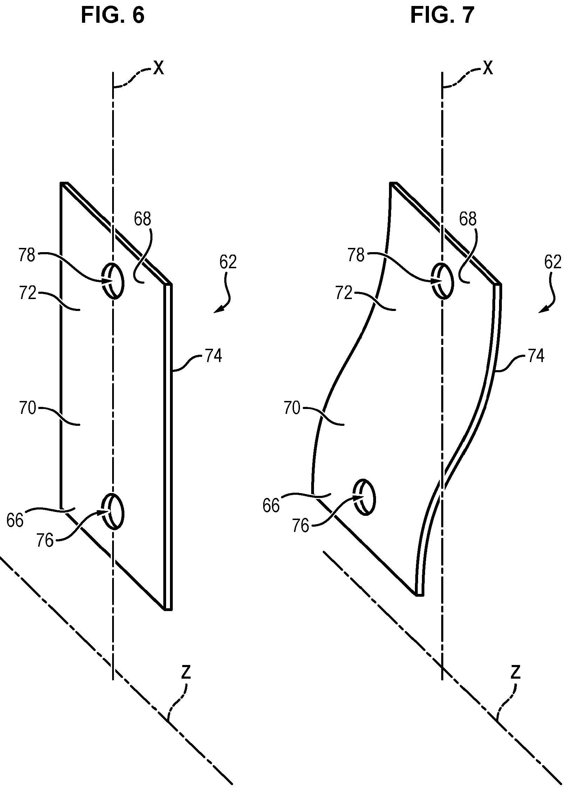

En référence aux **figures 6 et 7**, le premier élément déformable 62 présente une première portion d'extrémité 66 encastrée à l'organe de couplage 34, et une deuxième portion d'extrémité 68 opposée à la première portion d'extrémité 66, encastrée au piston de compression 12.

Le premier élément déformable 62 présente en outre une portion intermédiaire 70 reliant la première portion d'extrémité 66 à la deuxième portion d'extrémité 68.

Le premier élément déformable 62 est une tôle. Par tôle, on entend dans le présent texte que le premier élément déformable 62 présente une épaisseur fine comparée à sa longueur et sa largeur.

Dans une configuration non déformée, le premier élément déformable 62 est sensiblement plat.

Le premier élément déformable 62 présente deux faces opposées 72 et 74, l'épaisseur du premier élément déformable 62 étant mesurée perpendiculairement aux deux faces.

Dans une configuration non déformée, les deux faces opposées 72 et 74 sont planes. Le premier élément déformable 62 présente alors un profil rectiligne dans un plan perpendiculaire aux deux faces planes (à l'épaisseur du premier élément déformable 62 près).

Les deux faces planes 72, 74 sont rectangulaires.

Un premier orifice 76 est formé dans la première portion d'extrémité 66, et un deuxième orifice 78 est formé dans la deuxième portion d'extrémité 68. Les deux orifices 76, 78 débouchent chacun dans les deux faces opposées 72 et 74.

Le premier élément déformable 62 est encastré au piston de compression 12 et à l'organe de couplage 34 de telle sorte qu'il existe au moins une position de l'organe de couplage 34 relativement au carter 22, au cours d'un tour de la manivelle 28, dans laquelle le premier élément déformable 62 est dans sa configuration non déformée.

Plus précisément, comme cela est représenté en figure 6, le premier élément déformable 62 est encastré au piston de compression 12 et en la surface externe de l'organe de couplage 34 en des positions adaptées pour que le premier élément déformable 62 puisse être traversé sur toute sa longueur par le plan formé par l'axe moteur Z et l'axe de compression X (donc non déformé en flexion) lorsque :
- le maneton 32 occupe une position la plus proche du piston de compression 12 au cours d'un tour de la manivelle 28,
- le maneton 32 occupe une position la plus éloignée du piston de compression 12 au cours d'un tour de la manivelle 28.

Le premier élément déformable 62 est d'une flexibilité adaptée pour lui permettre d'adopter un profil en forme de S dans un plan perpendiculaire à l'axe moteur, lorsque l'axe du maneton 32 n'est pas dans le plan défini par l'axe moteur Z et l'axe de compression X, comme cela est visible sur la figure 7.

Néanmoins, le premier élément déformable 62 présente une rigidité axiale (mesurée parallèlement à l'axe X) adaptée pour lui permettre de transmettre un mouvement de translation alternatif du maneton 32 au piston de compression 12, même lorsqu'il est déformé et qu'il a cette forme de S.

C'est au premier bord 50 de l'organe de couplage 34 (se trouvant en regard du piston de compression 12) que la première portion d'extrémité du premier élément déformable 62 est fixée, et uniquement à celui-ci. Le premier élément déformable 62 est localisé entre le piston de compression 12 et le maneton 32 de la manivelle 28, quelle que soit la position du maneton 32 relativement au carter 22.

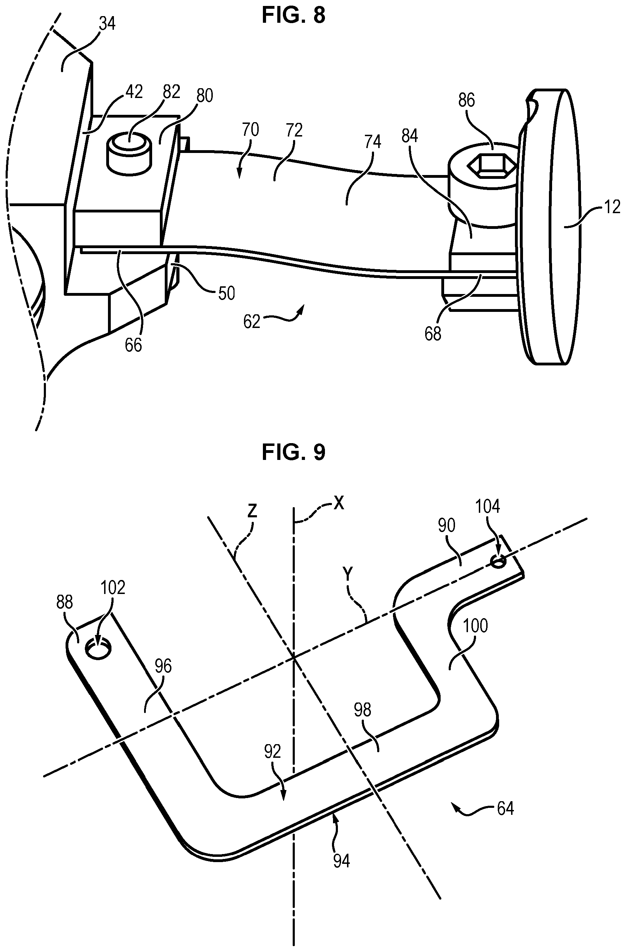

En référence à la **figure 8**, pour encastrer le premier élément déformable 66 à l'organe de couplage 34, le premier orifice 76 est aligné avec un orifice formé dans un élément de l'organe de couplage faisant saillie depuis la première paroi vers le piston de compression 12. Une cale 80 présentant un autre orifice est positionnée de sorte que son orifice soit aligné avec les orifices, et de sorte que la première portion d'extrémité 76 soit prise en sandwich entre l'élément en saillie et la cale. Un système vis-écrou 82 est utilisé pour encastrer la première portion du premier élément déformable 62 à l'organe de couplage 34. Ce système comprend une vis qui est passée à travers les trois orifices. L'écrou coopère avec la vis de sorte à maintenir celle-ci en travers des trois orifices.

Similairement, le deuxième orifice 78 est aligné avec un orifice dans un élément faisant saillie depuis le piston de compression 12 vers la première paroi de l'organe de couplage 34. Une cale 84 présentant un autre orifice est positionnée de sorte que son orifice soit aligné avec les orifices, et de sorte que la deuxième portion d'extrémité 68 soit prise en sandwich entre l'élément en saillie du piston 12 et la cale 84. Un système vis-écrou 86 est utilisé pour encastrer la deuxième portion d'extrémité du premier élément déformable 62 à l'organe de couplage 34. Ce système comprend une vis qui est passée à travers les trois orifices. L'écrou coopère avec la vis de sorte à maintenir celle-ci en travers des trois orifices.

Le premier élément déformable 62 est par exemple réalisé en tôle bleue à calibres. Cette dénomination, connue de l'homme du métier, couvre notamment l'acier de construction non allié XC70. Cet acier présente l'avantage d'avoir une bonne résistance élastique (environ 1080 MPa) utile pour la tenue mécanique du premier élément déformable 62.

La tôle bleue à calibres présente l'avantage d'avoir une limite d'élastique très importante, ainsi qu'une excellente limite en fatigue, tout en ayant un faible module Young pour ne pas nécessiter trop d'effort lors de sa déformation. L'emploi d'un tel matériau pour réaliser le premier élément déformable 62 est donc particulièrement avantageux.

Par exemple, le premier élément déformable 62 présente une épaisseur de 0.25 millimètres, une longueur de 15 millimètres, et une largeur de 6.25 millimètres.

Par ailleurs, le module d'Young du premier élément déformable 62 suivant l'axe de compression est de préférence de 210000 MPa.

Le premier élément déformable est typiquement fabriqué par découpe chimique.

En référence à la **figure 9****,** le deuxième élément déformable 64 présente une première portion d'extrémité 88 encastrée à l'organe de couplage 34, et une deuxième portion d'extrémité 90 opposée à la première extrémité 88, encastrée au piston régénérateur 16.

Le deuxième élément 64 déformable présente deux faces 92, 94 opposées, l'épaisseur de l'élément déformable 64, mesurée perpendiculairement aux deux faces 92, 94 est faible en comparaison de sa longueur et de sa largeur.

Le deuxième élément déformable 64 est encastré au piston régénérateur 16 et à l'organe de couplage 34 de telle sorte qu'il existe au moins une position de l'organe de couplage 34 relativement au carter 22, au cours d'un tour de la manivelle 28, dans laquelle le deuxième élément déformable 64 est dans une configuration non déformée.

Plus précisément, le deuxième élément déformable 64 est encastré au piston régénérateur 16 et en la surface externe de l'organe de couplage 34 en des positions adaptées pour que l'élément déformable puisse être traversé sur toute sa longueur par le plan formé par l'axe moteur et l'axe de régénération (donc non déformé en flexion) lorsque :
- le maneton 32 occupe une position la plus proche du piston régénérateur 16 au cours d'un tour de la manivelle 28,
- le maneton 32 occupe une position la plus éloignée du piston régénérateur 16 au cours d'un tour de la manivelle 28.

Le deuxième élément déformable 64 est d'une flexibilité adaptée pour lui permettre d'adopter un profil en forme de S dans un plan perpendiculaire à l'axe moteur Z, lorsque l'axe du maneton 32 n'est pas dans le plan défini par l'axe moteur Z et l'axe de régénération Y.

Néanmoins, le deuxième élément déformable 64 présente une rigidité axiale (mesurée parallèlement à l'axe de régénération Y) qui est adaptée pour lui permettre de transmettre un mouvement de translation alternatif du maneton 32 au piston régénérateur 16, même lorsqu'il est déformé et qu'il a cette forme de S.

Le deuxième élément déformable 64 est par exemple réalisé dans le même matériau que l'autre élément déformable, et ce pour les mêmes raisons.

Le deuxième élément déformable 64 est par exemple réalisé par découpe chimique. Ce procédé présente comme avantage d'être peu coûteux et particulièrement adapté aux pièces de faible épaisseur et relativement fragiles.

Le deuxième élément déformable 64 est une tôle.

Par exemple, le deuxième élément déformable 64 présente une épaisseur de 0.25 millimètres, une longueur de 15 millimètres, et une largeur de 6.25 millimètres.

Par ailleurs, le module d'Young de l'élément déformable suivant l'axe de compression est de préférence de 210000 MPa.

Toutefois, la forme du deuxième élément déformable 64 est différente de celle du premier élément déformable 62, et le lieu d'encastrement du deuxième élément déformable 64 à l'organe de couplage 34 est également différent de celui du premier élément déformable 62.

C'est au quatrième bord 56 de l'organe de couplage 34 que la première portion d'extrémité de l'élément déformable est fixée, et uniquement à celle-ci. En particulier, l'élément déformable n'est pas fixé au troisième bord 54 en regard du piston régénérateur 16.

Le deuxième élément déformable 64 présente une forme adaptée pour contourner l'organe de couplage 34 et le maneton 32.

En outre, les deux faces opposées 92 et 94 ne sont pas rectangulaires.

Le deuxième élément déformable 64 présente les portions suivantes (outre ses deux portions d'extrémité 88, 90) :
- une première portion intermédiaire 96 prolongeant la première portion d'extrémité 88, la première portion intermédiaire 96 s'étendant en regard du quatrième bord 56, parallèlement à l'axe moteur Z,
- une deuxième portion intermédiaire 98 prolongeant la première portion intermédiaire 96, en regard du sixième bord 60, et s'étendant vers le piston régénérateur 16, parallèlement à l'axe de régénération Y,
- une troisième portion intermédiaire 100 prolongeant la deuxième portion intermédiaire 98 et s'étendant parallèlement à l'axe moteur Z, de sorte que les trois portions 96, 98, 100 forment ensemble un U chevauchant l'organe de couplage 34.

Grâce au fait que la deuxième portion intermédiaire 98 est agencée en regard du sixième bord 60, l'organe de couplage 34 se trouve localisé entre la deuxième portion est l'arbre moteur 30. Le contournement de l'organe de couplage 34 par l'élément déformable est ainsi facilité puisque cet élément déformable n'est pas gêné par l'arbre moteur 30 au cours d'un tour de la manivelle 28.

Le deuxième élément déformable 64 comprend, à la jonction entre les portions 96 et 98, un congé et/ou un arrondi.

Le deuxième élément déformable 64 comprend par ailleurs, à la jonction entre les portions 98 et 100, un congé et/ou un arrondi.

Le deuxième élément déformable 64 comprend par ailleurs, à la jonction entre les portions 100 et 90, un congé et/ou un arrondi.

Chaque arrondi ou congé a pour effet d'éviter la concentration de contraintes dans le deuxième élément déformable 64, lorsque celui-ci est déformé en flexion.

La première portion 88 d'extrémité du premier élément déformable 62 présente un orifice 102, et la deuxième portion d'extrémité 90 présente un orifice 104. Les orifices 102, 104 débouchent chacun dans les deux faces opposées 92 et 94.

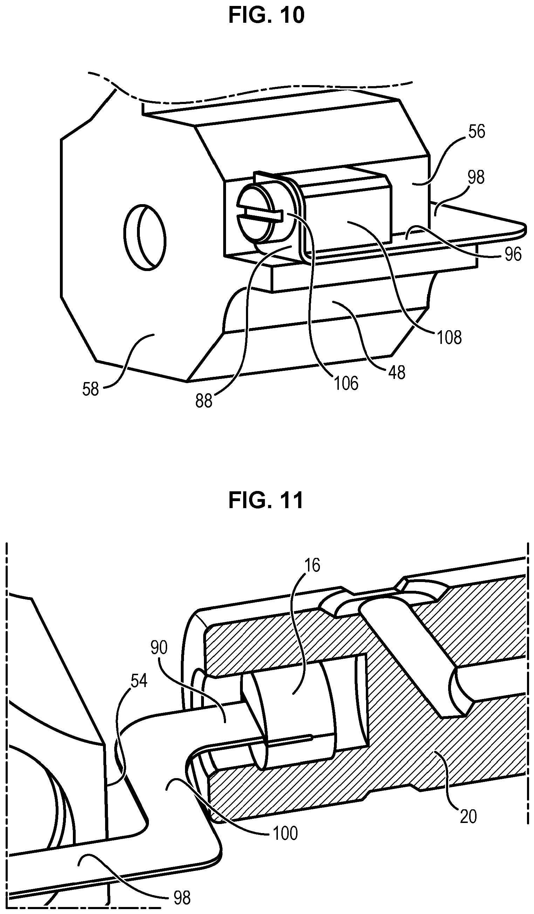

En référence à la **figure 10****,** pour encastrer le deuxième élément déformable 68 à l'organe de couplage 34, le premier orifice 102 peut être aligné avec un écrou 108 formé dans un élément de l'organe de couplage faisant saillie depuis la quatrième paroi 48. Cet écrou est formé par un trou taraudé dans cet élément. Une vis 106 est passée à travers l'orifice 102 et l'écrou 108 alignés.

De préférence, l'écrou 108 et la vis 106 sont agencés pour que l'axe de vissage de la vis dans l'écrou soit parallèle à l'axe moteur Z de la manivelle 28 et soit orienté de sorte que la vis puisse être vissée dans l'écrou au moyen d'un outil de vissage introduit dans le passage d'accès 26 à la cavité centrale 24. Un tel agencement permet de plus facilement démonter et remplacer le deuxième élément déformable 64. Par exemple, la première portion d'extrémité 88 est pliée à 90 degrés par rapport à la portion intermédiaire 96. Bien entendu, d'autres moyens d'encastrement du deuxième élément déformable 68 à l'organe de couplage 34 peuvent être utilisés en lieu et place de l'orifice 10 et d'un système vis-écrou.

Par ailleurs, la deuxième portion intermédiaire est insérée dans un interstice formé entre l'élément dans lequel l'écrou est formé et un autre élément faisant saillie depuis la quatrième paroi de l'organe de couplage 34, comme cela est représenté sur la figure 10.

Le deuxième orifice 104 du deuxième élément déformable est par ailleurs engagé dans une rainure formée dans le piston régénérateur 16, de sorte que cet orifice 104 soit agencé entre et aligné avec deux orifices transversaux débouchant dans la rainure (typiquement de diamètre de 0,6 mm). Une goupille est passée à travers les trois orifices alignés, pour encastrer le deuxième élément déformable 64 au piston régénérateur 16. En variante, d'autres moyens d'encastrement du deuxième élément déformable 68 au piston régénérateur 16 peuvent être utilisés, par exemple par collage, sans recourir à une goupille.

Les moyens de déplacement des pistons 12 et 16 sont montés dans le dispositif de refroidissement 8 selon le procédé suivant.

Premièrement, le deuxième élément déformable 64 est encastré au piston régénérateur 16, et le piston régénérateur 16 est fixé au régénérateur 20, de sorte à former un premier ensemble de pièces.

Deuxièmement, le premier élément déformable 62 est encastré à l'organe de couplage 34 et au piston de compression 12, de sorte à former un deuxième ensemble de pièces.

Troisièmement, les deux ensembles de pièces sont assemblés par encastrement du deuxième élément déformable 64 à l'organe de couplage 34.

Quatrièmement, l'arbre moteur 30 est inséré par le passage d'accès 26 à la cavité 24 de sorte que le maneton 32 s'engage dans la pièce de couplage 34.

Le dispositif de refroidissement 8 fonctionne de la manière suivante.

Lorsque le moteur est mis sous tension, il entraîne en rotation l'arbre moteur 30 de la manivelle 28 autour de l'axe Z. Le maneton 32 tourne lui-même autour de l'axe Z, étant solidaire de l'arbre moteur 30, de même que l'organe de couplage 34 s'étendant autour du maneton 30.

Au cours d'un tour de la manivelle 28, l'organe de couplage 34 se déplace simultanément en translation et en rotation.

Premièrement, l'organe de couplage 32 entraîne avec lui le premier élément déformable 62, de sorte que ce dernier déplace le piston de compression 12 en translation rectiligne suivant l'axe X, tout en se déformant en flexion.

Simultanément, l'organe de couplage 32 entraîne avec lui le deuxième élément déformable 64, de sorte que ce dernier déplace le piston de de régénération 16 en translation rectiligne suivant l'axe Y, tout en se déformant en flexion. Il est à noter que le deuxième élément déformable 64 est plus long que s'il avait été encastré au premier bord 50 de l'organe de couplage 34, en regard du piston régénérateur 12. Grâce à cette surlongueur, l'élément déformable 64 est peu fléchi au cours d'un tour de la manivelle 28, ce qui ralentit son usure.

Simultanément, l'organe de couplage subit un léger mouvement de rotation alternatif par rapport au carter 22. Cette rotation est limitée par la rigidité axiale des deux éléments déformables 62 et 64. En conséquence, le bord 50 de l'organe de couplage 34 demeure constamment en regard du piston de compression 12, et le bord 54 de l'organe de couplage 34 demeure constamment en regard du piston régénérateur 16, au cours d'un tour de la manivelle 28.

Une fois un tour de manivelle complété, un cycle thermique du dispositif de refroidissement 8 est terminé.

Dans le premier mode de réalisation présenté ci-dessus, celui des deux éléments déformables 62 et 64 dont la forme en U contourne l'organe de couplage est avantageusement le deuxième élément déformable 64 encastré au piston régénérateur, et ce pour les raisons suivantes. Comme indiqué précédemment, cette forme en U permet de faire en sorte que l'élément déformable soit peu fléchi au cours d'un cycle de Stirling. Toutefois, cette forme en U est relativement fragile. Comme les efforts sur le piston régénérateur sont plus faibles que sur le piston « chaud » de compression, il est préférable que ce soit l'élément déformable 64 qui ait une telle forme en U.

D'autres modes de réalisation de dispositif de refroidissement peuvent être envisagés.

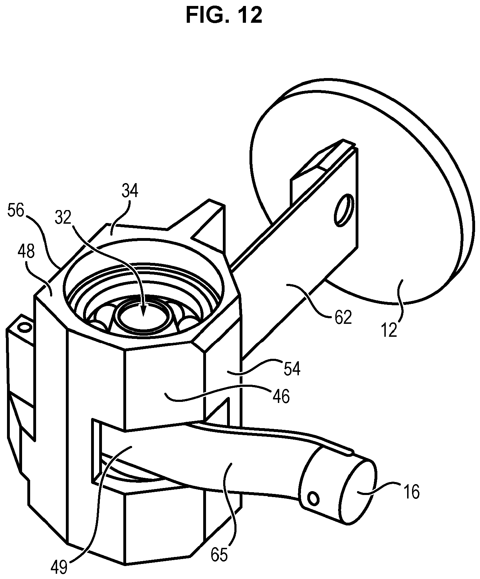

La **figure 12** montre par exemple un deuxième mode de réalisation de dispositif de refroidissement différant du premier mode de réalisation par le fait que le deuxième élément déformable 64 contournant l'organe de couplage 34 est remplacé par un élément déformable 65 traversant le corps de l'organe de coupage 34. Le deuxième élément déformable 65 s'étend notamment en travers d'un passage formé dans la troisième paroi 46 (celle la plus proche et en regard du piston régénérateur 16, et dans lequel est formé le bord 54), et par ailleurs en travers d'un autre passage formé dans la quatrième paroi 48 opposée à la paroi 46 (et dans laquelle le bord 56 est formé).

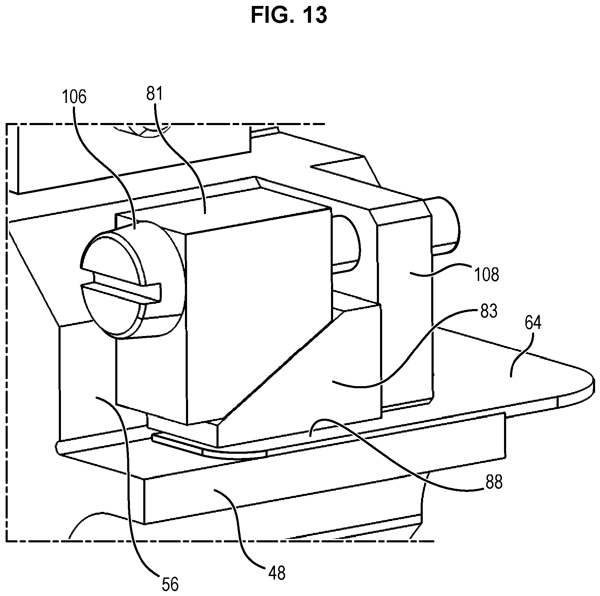

La **figure 13** montre un troisième mode de réalisation de dispositif de refroidissement qui diffère du premier mode de réalisation par les caractéristiques suivantes relatives à l'encastrement de l'élément déformable 64 à l'organe de couplage 34. La portion d'extrémité 88 de l'élément déformable 64 d'est pas pliée à 90 degrés par rapport au reste de l'élément déformable 64. Par ailleurs, la cale 80 est remplacé par deux éléments de cale 81, 83. La vis 106 traverse le premier élément de cale 81 puis l'écrou 108 formé dans l'organe de couplage 34. Le deuxième élément de cale 83 est agencé pour reposer contre la portion d'extrémité 88 de l'élément déformable 64. Les deux éléments de cale 81 et 83 sont de formes adaptées pour qu'un vissage de la vis parallèlement à l'axe moteur Z entraîne une sollicitation du premier élément de cale 81 sur le deuxième élément de cale suivant un axe perpendiculaire à l'axe Z (et parallèle à l'axe X), et par voie de conséquence une sollicitation du deuxième élément de cale 83 contre la portion d'extrémité de l'élément déformable 64. Une telle sollicitation peut être obtenue en conférant aux deux éléments de cales une forme biseautée.

Par ailleurs, les deux éléments déformables de chacun des modes de réalisations décrits précédemment peuvent être intervertis au sein du dispositif de refroidissement 8.

## Revendications

1. Dispositif de refroidissement (8) comprenant :
• un carter (22),
• une manivelle (28) mobile en rotation par rapport au carter (22),
• un piston (16),
• un organe de couplage (34) monté à rotation sur la manivelle (28), l'organe de couplage (34) présentant un premier bord (54) en regard du piston (16) et un deuxième bord (56) opposé au premier bord (54),
• un élément déformable (64) encastré à l'organe de couplage (34) et encastré au piston (16), l'élément déformable (64) étant configuré pour déplacer le piston (16) en translation par rapport au carter tout en se déformant, lorsque la manivelle (28) est mise en rotation par rapport au carter (22),
le dispositif de refroidissement (8) étant **caractérisé en ce que** l'élément déformable (64) est encastré au deuxième bord (56) de l'organe de couplage (34), et **en ce que** lequel l'élément déformable (64) comprend :
• une première portion (96) s'étendant le long du deuxième bord (56) de l'organe parallèlement à un axe de rotation de la manivelle (28),
• une deuxième portion (98) prolongeant la première portion (96) et s'étendant vers le piston (16),
• une troisième portion (100) prolongeant la deuxième portion (98) et s'étendant parallèlement à l'axe de rotation de la manivelle (28), de sorte que les trois portions (96, 98, 100) forment un U chevauchant l'organe de couplage (34).

2. Dispositif de refroidissement (8) selon la revendication précédente, dans lequel l'élément déformable (64) présente une forme adaptée pour contourner l'organe de couplage (34) sans toucher le premier bord (54) au cours de la rotation de la manivelle (28) par rapport au carter (22).

3. Dispositif de refroidissement (8) selon l'une des revendications précédentes, dans lequel la manivelle est mobile en rotation par rapport au carter (22) autour d'un axe de rotation (Z) et le piston est mobile en translation le long d'un axe de translation (Y) coplanaire avec l'axe de rotation (Z).

4. Dispositif de refroidissement (8) selon l'une des revendications précédentes, dans lequel
• la manivelle comprend un arbre moteur (30) et un maneton excentré par rapport à l'arbre moteur (32),
• l'organe de couplage (34) est monté à rotation sur le maneton (32), et est localisé entre la deuxième portion (98) de l'élément déformable (64) et l'arbre moteur (30).

5. Dispositif de refroidissement selon l'une des revendications précédentes, dans lequel l'élément déformable (64) présente un arrondi et/ou un congé en au moins une jonction entre deux des portions (96, 98, 100).

6. Dispositif de refroidissement (8) selon l'une des revendications précédentes, dans lequel la manivelle (28) comprend un maneton (32), et dans lequel l'organe de couplage (34) comprend une première paroi (46) dans laquelle le premier bord (54) est formé, et une deuxième paroi (48) dans laquelle le deuxième bord (56) est formé, le maneton (32) étant agencé entre les première et deuxième parois (46, 48).

7. Dispositif de refroidissement (8) selon l'une des revendications précédentes, dans lequel l'élément déformable (64) est en métal.

8. Dispositif de refroidissement (8) selon l'une des revendications précédentes, dans lequel l'élément déformable (64) est une tôle, par exemple une tôle bleue à calibres.

9. Dispositif de refroidissement (8) selon l'une des revendications précédentes, dans lequel :
• l'élément déformable (64) comprend une portion d'extrémité (90) présentant un premier orifice (104),
• le piston (16) présente une rainure pour recevoir la portion d'extrémité (104), deux orifices débouchant dans la rainure et agencés pour être alignés avec le premier orifice (104), et une goupille passée à travers les trois orifices alignés pour encastrer l'élément déformable (64) au piston (16).

10. Dispositif de refroidissement (8) selon l'une des revendications précédentes, comprenant
• un écrou formé dans l'organe de couplage (34),
• une vis propre à coopérer avec l'élément déformable (64) et l'écrou de sorte à encastrer l'élément déformable (64) à l'organe de couplage (34).

11. Dispositif de refroidissement (8) selon la revendication précédente, dans lequel
• le carter (22) définit une cavité (24) logeant l'organe de couplage (34), et présente par ailleurs un passage d'accès (26) à la cavité (24),
• l'écrou est orienté en regard du passage d'accès (22) de sorte que la vis puisse être vissée dans l'écrou au moyen d'un outil de vissage introduit dans la cavité via le passage d'accès (26).

12. Dispositif de refroidissement (8) selon l'une des revendications précédentes, de type Stirling alpha, et dans lequel le piston (16) est un piston froid du dispositif de refroidissement (8).

13. Dispositif de refroidissement (8) selon l'une des revendications précédentes, comprenant en outre :
• un deuxième piston (12),
• un deuxième élément déformable (62) encastré à l'organe de couplage (34) et encastré au deuxième piston (12), le deuxième élément déformable (62) étant configuré pour déplacer le deuxième piston (12) en translation par rapport au carter (22) tout en se déformant, lorsque la manivelle (28) est mise en rotation par rapport au carter (22).

14. Dispositif de refroidissement (8) selon la revendication précédente, dans lequel l'organe de couplage (34) présente également un troisième bord (50) en regard du deuxième piston (12), et dans lequel le deuxième élément déformable (62) est encastré au troisième bord (50) de l'organe de couplage (34).

15. Dispositif de refroidissement (8) selon l'une des revendications 13 à 14, de type Stirling alpha, et dans lequel le deuxième piston (12) est un piston chaud du dispositif de refroidissement (8).

16. Dispositif de vision infrarouge (1), par exemple des jumelles, comprenant un dispositif de refroidissement (8) selon l'une des revendications précédentes.

## Patentansprüche

1. Kühlvorrichtung (8), umfassend:
• ein Gehäuse (22),
• eine in Bezug auf das Gehäuse (22) drehbewegliche Kurbel (28),
• einen Kolben (16),
• ein Kopplungsorgan (34), das drehend an der Kurbel (28) montiert ist, wobei das Kopplungsorgan (34) eine erste Kante (54) gegenüber dem Kolben (16) und eine zweite Kante (56) entgegengesetzt zur ersten Kante (54) aufweist,
• ein verformbares Element (64), das in das Kopplungsorgan (34) eingelassen ist und in den Kolben (16) eingelassen ist, wobei das verformbare Element (64) konfiguriert ist, um den Kolben (16) in Bezug auf das Gehäuse translatorisch zu verschieben, indem es sich verformt, wenn die Kurbel (28) in Bezug auf das Gehäuse (22) in Drehung versetzt wird,
wobei die Kühlvorrichtung (8) **dadurch gekennzeichnet ist, dass** das verformbare Element (64) an der zweiten Kante (56) des Kopplungsorgans (34) eingelassen ist, und dadurch, dass das verformbare Element (64) umfasst:
• einen ersten Abschnitt (96), der sich entlang der zweiten Kante (56) des Organs, parallel zu einer Drehachse der Kurbel (28) erstreckt,
• einen zweiten Abschnitt (98), der den ersten Abschnitt (96) verlängert, und sich zum Kolben (16) erstreckt,
• einen dritten Abschnitt (100), der den zweiten Abschnitt (98) verlängert, und sich parallel zur Drehachse der Kurbel (28) erstreckt, sodass die drei Abschnitte (96, 98, 100) ein U bilden, das sich mit dem Kopplungsorgan (34) überschneidet.

2. Kühlvorrichtung (8) nach dem vorstehenden Anspruch, wobei das verformbare Element (64) eine Form aufweist, die angepasst ist, um das Kopplungsorgan (34) zu umgehen, ohne die erste Kante (54) im Laufe der Drehung der Kurbel (28) in Bezug auf das Gehäuse (22) zu berühren.

3. Kühlvorrichtung (8) nach einem der vorstehenden Ansprüche, wobei die Kurbel in Bezug auf das Gehäuse (22) um eine Drehachse (Z) drehbeweglich ist, und der Kolben entlang einer mit der Drehachse (Z) komplanaren Translationsachse (Y) translationsbeweglich ist.

4. Kühlvorrichtung (8) nach einem der vorstehenden Ansprüche, wobei
• die Kurbel eine Motorwelle (30) und einen in Bezug auf die Motorwelle (32) außermittigen Kurbelzapfen umfasst,
• das Kopplungsorgan (34) drehend auf dem Kurbelzapfen (32) montiert ist, und zwischen dem zweiten Abschnitt (98) des verformbaren Elements (64) und der Motorwelle (30) gelegen ist.

5. Kühlvorrichtung nach einem der vorstehenden Ansprüche, wobei das verformbare Element (64) eine Abrundung und/oder eine Ausnehmung in mindestens einer Verbindung zwischen zwei der Abschnitte (96, 98, 100) aufweist.

6. Kühlvorrichtung (8) nach einem der vorstehenden Ansprüche, wobei die Kurbel (28) einen Kurbelzapfen (32) umfasst, und wobei das Kopplungsorgan (34) eine erste Wand (46) umfasst, in der die erste Kante (54) gebildet ist, und eine zweite Wand (48), in der die zweite Kante (56) gebildet ist, wobei der Kurbelzapfen (32) zwischen der ersten und zweiten Wand (46, 48) angeordnet ist.

7. Kühlvorrichtung (8) nach einem der vorstehenden Ansprüche, wobei das verformbare Element (64) aus Metall ist.

8. Kühlvorrichtung (8) nach einem der vorstehenden Ansprüche, wobei das verformbare Element (64) ein Blech, beispielsweise ein Blaublech mit Kalibern ist.

9. Kühlvorrichtung (8) nach einem der vorstehenden Ansprüche, wobei:
• das verformbare Element (64) einen Endabschnitt (90) umfasst, der eine erste Öffnung (104) aufweist,
• der Kolben (16) eine Nut aufweist, um den Endabschnitt (104) aufzunehmen, wobei zwei Öffnungen in die Nut münden und angeordnet sind, um mit der ersten Öffnung (104) ausgerichtet zu werden, und einen Stift, der durch die drei ausgerichteten Öffnungen verläuft, um das verformbare Element (64) in den Kolben (16) einzulassen.

10. Kühlvorrichtung (8) nach einem der vorstehenden Ansprüche, umfassend
• eine Mutter, die in dem Kopplungsorgan (34) gebildet ist,
• eine Schraube, die geeignet ist, um mit dem verformbaren Element (64) und der Mutter zusammenzuwirken, um das verformbare Element (64) in das Kopplungsorgan (34) einzulassen.

11. Kühlvorrichtung (8) nach dem vorstehenden Anspruch, wobei
• das Gehäuse (22) einen Hohlraum (24) definiert, der das Kopplungsorgan (34) aufnimmt, und darüber hinaus einen Zugangsdurchgang (26) zum Hohlraum (24) aufweist,
• die Mutter gegenüber dem Zugangsdurchgang (22) ausgerichtet ist, sodass die Schraube anhand eines Schraubwerkzeugs, das über den Zugangsdurchgang (26) in den Hohlraum eingeführt wird, in die Mutter geschraubt werden kann.

12. Kühlvorrichtung (8) nach einem der vorstehenden Ansprüche, vom Typ Stirling Alpha, und wobei der Kolben (16) ein kalter Kolben der Kühlvorrichtung (8) ist.

13. Kühlvorrichtung (8) nach einem der vorstehenden Ansprüche, weiter umfassend:
• einen zweiten Kolben (12),
• ein zweites verformbares Element (62), das in das Kopplungsorgan (34) eingelassen ist, und in den zweiten Kolben (12) eingelassen ist, wobei das zweite verformbare Element (62) konfiguriert ist, um den zweiten Kolben (12) in Bezug auf das Gehäuse (22) translatorisch zu verschieben, indem es sich verformt, wenn die Kurbel (28) in Bezug auf das Gehäuse (22) in Drehung versetzt wird.

14. Kühlvorrichtung (8) nach dem vorstehenden Anspruch, wobei das Kopplungsorgan (34) auch eine dritte Kante (50) gegenüber dem zweiten Kolben (12) aufweist, und wobei das zweite verformbare Element (62) in die dritte Kante (50) des Kopplungsorgans (34) eingelassen ist.

15. Kühlvorrichtung (8) nach einem der Ansprüche 13 bis 14, vom Typ Stirling Alpha, und wobei der zweite Kolben (12) ein heißer Kolben der Kühlvorrichtung (8) ist.

16. Infrarot-Sichtvorrichtung (1), beispielsweise Ferngläser, eine Kühlvorrichtung (8) nach einem der vorstehenden Ansprüche umfassend.

## Claims

1. A cooling device (8) comprising:
• a crankcase (22),
• a crank (28) movable in rotation relative to the crankcase (22),
• a piston (16),
• a coupling member (34) rotatably mounted on the crank (28), the coupling member (34) having a first edge (54) facing the piston (16) and a second edge (56) opposite the first edge (54),
• a deformable element (64) embedded in the coupling member (34) and embedded in the piston (16), the deformable element (64) being configured to move the piston (16) in translation relative to the crankcase while deforming, when the crank (28) is rotated relative to the crankcase (22),
the cooling device (8) being **characterised in that** the deformable element (64) is embedded in the second edge (56) of the coupling member (34), and **in that** the deformable element (64) comprises:
• a first portion (96) extending along the second edge (56) of the member parallel to an axis of rotation of the crank (28),
• a second portion (98) continuing the first portion (96) and extending towards the piston (16),
• a third portion (100) continuing the second portion (98) and extending parallel to the axis of rotation of the crank (28), so that the three portions (96, 98, 100) form a U overlapping the coupling member (34) .

2. The cooling device (8) according to the preceding claim, wherein the deformable element (64) has a shape adapted to bypass the coupling member (34) without touching the first edge (54) during the rotation of the crank (28) relative to the crankcase (22).

3. The cooling device (8) according to one of the preceding claims, wherein the crank is movable in rotation relative to the crankcase (22) about an axis of rotation (Z) and the piston is movable in translation along an axis of translation (Y) coplanar with the axis of rotation (Z).

4. The cooling device (8) according to one of the preceding claims, wherein
• the crank comprises a drive shaft (30) and a crankpin eccentric relative to the drive shaft (32),
• the coupling member (34) is rotatably mounted on the crankpin (32), and is located between the second portion (98) of the deformable element (64) and the drive shaft (30).

5. The cooling device according to one of the preceding claims, wherein the deformable element (64) has a rounding and/or a fillet in at least one junction between two of the portions (96, 98, 100).

6. The cooling device (8) according to one of the preceding claims, wherein the crank (28) comprises a crankpin (32), and wherein the coupling member (34) comprises a first wall (46) wherein the first edge (54) is formed, and a second wall (48) wherein the second edge (56) is formed, the crankpin (32) being arranged between the first and second walls (46, 48).

7. The cooling device (8) according to one of the preceding claims, wherein the deformable element (64) is made of metal.

8. The cooling device (8) according to one of the preceding claims, wherein the deformable element (64) is a sheet, for example a blue gauge sheet.

9. The cooling device (8) according to one of the preceding claims, wherein:
• the deformable element (64) comprises an end portion (90) having a first orifice (104),
• the piston (16) has a groove to receive the end portion (104), two orifices opening into the groove and arranged to be aligned with the first orifice (104), and a pin passed through the three aligned orifices to embed the deformable element (64) in the piston (16).

10. The cooling device (8) according to one of the preceding claims, comprising
• a nut formed in the coupling member (34),
• a screw suitable for cooperating with the deformable element (64) and the nut so as to embed the deformable element (64) in the coupling member (34).

11. The cooling device (8) according to the preceding claim, wherein
• the crankcase (22) defines a cavity (24) housing the coupling member (34), and moreover has a passage (26) for access to the cavity (24),
• the nut is oriented opposite the access passage (22) so that the screw can be screwed into the nut by means of a screwing tool introduced into the cavity via the access passage (26).

12. The cooling device (8) according to one of the preceding claims, of the Stirling alpha type, and wherein the piston (16) is a cold piston of the cooling device (8) .

13. The cooling device (8) according to one of the preceding claims, further comprising:
• a second piston (12),
• a second deformable element (62) embedded in the coupling member (34) and embedded in the second piston (12), the second deformable element (62) being configured to move the second piston (12) in translation relative to the crankcase (22) while deforming, when the crank (28) is rotated relative to the crankcase (22).

14. The cooling device (8) according to the preceding claim, wherein the coupling member (34) also has a third edge (50) facing the second piston (12), and wherein the second deformable element (62) is embedded in the third edge (50) of the coupling member (34).

15. The cooling device (8) according to one of claims 13 to 14, of the Stirling alpha type, and wherein the second piston (12) is a hot piston of the cooling device (8).

16. An infrared vision device (1), for example binoculars, comprising a cooling device (8) according to one of the preceding claims.
